# EUROPEAN PATENT APPLICATION

(11) **EP 3 252 659 A1**
(43) Date of publication of application: **06.12.2017**
(21) Application number: 17168402.0
(22) Date of filing: 27.04.2017
(51) Int. Cl.: G06K 9/00

(54) **METHOD FOR CONTROLLING UNLOCKING AN TERMINAL**

(30) Priority: 30.05.2016 CN 201610375439
(71) Applicant: Guangdong Oppo Mobile Telecommunications Corp., Ltd., Dongguan, Guangdong 523860 (CN)
(72) Inventor: ZHOU, Yibao, Chang'an Dongguan, Guangdong (CN)
(74) Representative: Johnson, Richard Alan

(57) **Abstract**

A method for controlling unlocking is provided. When a touch operation of a finger of a user on a fingerprint recognition sensor of a terminal is detected, a first fingerprint image is received; a second fingerprint image is received according to a CAC parameter corresponding to a default finger when it is determined based on the first fingerprint image that the finger of the user is in a steady state, and N third fingerprint images are received according to N sets of CAC parameters; a target fingerprint image is determined and a fingerprint comparison is preformed on the target fingerprint image; the terminal is unlocked when the target fingerprint image is matched.

## Description

### TECHNICAL FIELD

The present disclosure relates to the field of electronic technology, and particularly to a method for controlling unlocking and a terminal.

### BACKGROUND

At present, the fingerprint recognition technology has become a standard configuration of mainstream terminals (such as smart phones, tablet PCs and other terminal equipment). Fingerprint recognition can be used for unlocking, waking, and other functions of the terminal; besides, fingerprint recognition is an important part of mobile payments. Fingerprint payment also puts forward higher requirements for security while providing users with convenience. Fingerprint recognition process can include feature extraction, data saving, and image matching. First, an original fingerprint image is acquired via a fingerprint recognition sensor, thereafter, the original fingerprint image undergoes preliminary processing so that it can be clearer, and then, the original fingerprint image matches a registered fingerprint template for minutiae. The terminal will be unlocked when matches.

"Unlocking time" refers to a time period from the fingerprint image is acquired by the terminal until system unlocking. The length of the unlocking time has become a competition point of products of terminal manufacturers, and how to shorten the unlocking time of the terminal has become a technical problem to be solved in the field.

### SUMMARY

A method for controlling unlocking and a terminal are provided so as to reduce the false reject rate (FRR) of fingerprint unlocking.

According to a first aspect of the present disclosure, there is provided a method for controlling unlocking, which includes the follows.

When a touch operation of a finger of a user on a fingerprint recognition sensor of a terminal is detected, a first fingerprint image is received. A second fingerprint image is received according to a CAC parameter corresponding to a default finger when it is determined based on the first fingerprint image that the finger of the user is in the steady state, and N third fingerprint images are received according to N sets of CAC parameters, where N is an integer greater than 1. A target fingerprint image is determined and a fingerprint comparison is performed on the target fingerprint image, the target fingerprint image is the best fingerprint image among the second fingerprint image and the N third fingerprint images. The terminal is unlocked when the target fingerprint image is matched.

In some possible implementations, it is determined that the finger of the user is in the steady state when the clarity of the first fingerprint image is greater than or equal to a preset value.

In some possible implementations, the method for controlling unlocking further includes the follows. A target time length is determined according to the clarity of the first fingerprint image when the finger of the user is not in the steady state. The process that the second fingerprint image is received according to the CAC parameter corresponding to the default finger includes the follows. The second fingerprint image is received according to the CAC parameter corresponding to the default finger after the target time length.

In some possible implementations, the CAC parameter includes an offset of an analog-to-digital converter (ADC) and a gain of the ADC, the method further include the follows before receiving the N third fingerprint images according to the N sets of CAC parameters. R offsets of the ADC and J gains of the ADC are determined according to the clarity of the first fingerprint image, where R and J are integers greater than 1. The N sets of CAC parameters are generated according to the R offsets of the ADC and J gains of the ADC, and each set of the N sets of CAC parameters includes one offset of the ADC and one gain of the ADC.

In some possible implementations, the process of matching the target fingerprint image includes the follows.

Overall features of the target fingerprint image are extracted, and the extracted overall features are compared with overall features of a pre-stored fingerprint template of the terminal. When the similarity between the extracted overall features and the overall features of the pre-stored fingerprint template is greater than or equal to a third threshold, local features of the target fingerprint image are extracted and compared with local features of the fingerprint template; when the similarity between the extracted local features and the local features of the pre-stored fingerprint template is greater than or equal to a fourth threshold, it is determined that the target fingerprint image is matched.

In some possible implementations, the method further includes the follows.

During the fingerprint comparison of the target fingerprint image, it is determined whether there is an application bound to the target fingerprint image. When there is an application bound to the target fingerprint image, the terminal can be unlocked by loading and displaying an interface that is running when the application was last closed; when there is no application bound to the target fingerprint image, the terminal can be unlocked by loading and displaying the system desktop of the terminal.

According to another aspect of the present disclosure, there is provided a terminal, which includes a fingerprint receiving unit, a first determining unit, a fingerprint comparing unit, and an unlocking unit.

The fingerprint receiving unit is configured to receive a first fingerprint image when a touch operation of a finger of a user on a fingerprint recognition sensor of a terminal is detected, receive a second fingerprint image according to a CAC parameter corresponding to a default finger when it is determined based on the first fingerprint image that the finger of the user is in the steady state, and receive N third fingerprint images according to N sets of CAC parameters, wherein N is an integer greater than 1.

The first determining unit is configured to determine a target fingerprint image; the target fingerprint image is the best fingerprint image among the second fingerprint image and the N third fingerprint images.

The fingerprint comparing unit is configured to match the target fingerprint image.

The unlocking unit is configured to unlock the terminal when the target fingerprint image is matched.

In some possible implementations, it is determined that the finger of the user is in the steady state when the clarity of the first fingerprint image is greater than or equal to a preset value.

In some possible implementations, the terminal further includes a second determining unit, which is configured to determine a target time length according to the clarity of the first fingerprint image when the finger of the user is not in the steady state. The fingerprint receiving unit is configured to receive the second fingerprint image according to the CAC parameter corresponding to the default finger after the target time length.

In some possible implementations, the CAC parameter includes an offset of an analog-to-digital converter (ADC) and a gain of the ADC. The terminal further includes an third determining unit, which is configured to determine R offsets of the ADC and J gains of the ADC according to the clarity of the first fingerprint image, and generate the N sets of CAC parameters according to the R offsets of the ADC and J gains of the ADC, where R and J are integers greater than 1, each set of the N sets of CAC parameters comprises one offset of the ADC and one gain of the ADC.

In some possible implementations, the fingerprint comparing unit is configured to: extract overall features of the target fingerprint image and compare the extracted overall features with overall features of a pre-stored fingerprint template of the terminal; when the similarity between the extracted overall features and the overall features of the pre-stored fingerprint template is greater than or equal to a third threshold, extract local features of the target fingerprint image and compare the extracted local features with local features of the fingerprint template; when the similarity between the extracted local features and the local features of the pre-stored fingerprint template is greater than or equal to a fourth threshold, determine that the result of the fingerprint comparison is matched.

In some possible implementations, the terminal further includes a fourth determining unit, which is configured to determine whether there is an application bound to the target fingerprint image. The unlocking unit is configured to load and display an interface that is running when the application was last closed when there is an application bound to the target fingerprint image, or load and display the system desktop of the terminal when there is no application bound to the target fingerprint image.

According to a third aspect of the present disclosure, there is provided a terminal, which includes a memory configured to store executable program codes, a processor coupled with the memory, and a fingerprint recognition sensor configured to receive fingerprint images. The processor is configured to call the executable program codes stored in the memory to perform all or part of the operations of the method for controlling unlocking according to the first aspect of the present disclosure.

According to a fourth aspect of the present disclosure, there is provided a computer readable storage medium, which is configured to store computer software instructions configured to be used by the terminal according to the second aspect of the present disclosure and includes programs configured to perform the technical solutions of the above aspects.

In the embodiments of the present disclosure, a fingerprint image (that is, the first fingerprint image) is received before the fingerprint image for unlocking is received, and then a fingerprint stabilization judgment is performed based on the fingerprint image obtained. The fingerprint image for unlocking is not received until the finger of the user tends to be stable, in this way, it is possible to prevent the fingerprint recognition sensor from acquiring a vague fingerprint image, and prevent false rejection rate (FRR) of fingerprint recognition from increasing. In addition, the fingerprint stabilization judgment can be accomplished with aid of one fingerprint image; therefore, it is possible to reduce the time required for the fingerprint stabilization judgment and reduce the unlocking time of the terminal.

### BRIEF DESCRIPTION OF THE DRAWINGS

In order to illustrate technical solutions of embodiments of the present disclosure more clearly, the drawings used in the description of the embodiments will be briefly described, it will be apparent that the drawings described in the following are embodiments of the present disclosure, and it will be apparent to those skilled in the art that other drawings can be obtained from the drawings without any creative work.
FIG.1 is a flow schematic diagram illustrating a method for controlling unlocking according to an embodiment of the present disclosure.
FIG.2 is a flow schematic diagram illustrating another method for controlling unlocking according to an embodiment of the present disclosure.
FIG.3 is a flow schematic diagram illustrating another method for controlling unlocking according to an embodiment of the present disclosure.
FIG.4 is a flow schematic diagram illustrating another method for controlling unlocking according to an embodiment of the present disclosure.
FIG.5 is a structure schematic diagram illustrating a terminal according to an embodiment of the present disclosure.
FIG.6 is a structure schematic diagram illustrating another terminal according to an embodiment of the present disclosure.
FIG.7 is a structure schematic diagram illustrating another terminal according to an embodiment of the present disclosure.
FIG.8 is a schematic diagram illustrating an example of a fingerprint template.

### DETAILED DESCRIPTION OF ILLUSTRATED EMBODIMENTS

In order to provide a better understanding of the present disclosure for those skilled in the art, technical schemes of the embodiments of the present disclosure will be described in the following description in conjunction with the accompanying drawings clearly and completely. Obviously, the described embodiments are merely a part rather than all of the embodiments of the present disclosure. All other embodiments obtained by those of ordinary skill in the art based on the embodiments of the present disclosure without creative labor should fall within the scope of the present disclosure.

The following will be described in detail.

The terms "first", "second", "third", and "fourth" used in the specification, the claims, and the accompany drawings of the present disclosure are used for distinguishing between different objects rather than describing a particular order. The terms "include", "comprise", and "have" as well as variations thereof are intended to cover non-exclusive inclusion. For example, a process, method, system, product, or apparatus including a series of steps or units is not limited to the listed steps or units, it can optionally include other steps or units that are not listed; alternatively, other steps or units inherent to the process, method, product, or device can be included either.

The term "embodiment" or "implementation" referred to herein means that a particular feature, structure, or feature described in connection with the embodiment may be contained in at least one embodiment of the present disclosure. The phrase appearing in various places in the specification does not necessarily refer to the same embodiment, nor does it refer an independent or alternative embodiment that is mutually exclusive with other embodiments. It is expressly and implicitly understood by those skilled in the art that an embodiment described herein may be combined with other embodiments.

In the following, some of the terms used herein are explained to facilitate the understanding for those skilled in the art.

### Terminal

Terminal, also known as terminal device, terminal equipment or user equipment (UE), means a device that provides voice and/or data connectivity to a user, examples of which includes hand-held devices with wireless connectivity function, on-board devices and the like. Common terminals include, for example, mobile phones, tablets, laptops, handheld computers, mobile internet devices (MID), and wearable equipment such as smart watches, smart bracelets, and pedometers and so on.

### Fingerprint recognition sensor

A fingerprint recognition sensor, also known as a fingerprint recognition module or fingerprint sensor, can realize the recognition of individual fingerprint features through a specific induction sensor. At present, the fingerprint recognition sensor is mainly divided into an optical fingerprint sensor, a capacitive fingerprint sensor, and a radio frequency (RF) fingerprint sensor. The fingerprint recognition sensor can be set in combination with a metal dome array (in other words, dome key) of a terminal, and can be set on the front surface, the race surface, or the side surface of the terminal, the present disclosure is not limited thereto. Similarly, the fingerprint recognition sensor can be set in combination with the touch screen of the terminal. For example, the fingerprint recognition sensor can be set below the touch panel of the touch screen.

### Capacity auto control (CAC) parameter

A CAC parameter includes "ADC shift or ADC offset", "ADC gain", and "pixel gain". "ADC shift" refers to the offset of an analog-to-digital converter (ADC).

Assume that the fingerprint recognition sensor includes 56*172 pixels, each pixel in a drawing process corresponds to a pixel value; that is, a total of 10,752 pixel values can be obtained, usually the size of these 10,752 pixel values is between 0.4 and 0.8 and the pixel values for most pixels are different, and then a distribution map can be formed. "ADC gain" refers to the gain of the ADC; the greater the gain, the more dispersed the distribution map, on the other hand, the smaller the gain, the more concentrated the distribution map; the more dispersed the distribution map, the higher the contrast of an image received, and originally darker pixels in the fingerprint image will be even darker while originally whiter pixels in the fingerprint image will be even whiter. "Pixel gain" refers to the gain of a pixel and is determined by a capacitor connected in parallel with an amplifier. The amplifier is connected in parallel with multiple capacitors and each of the capacitors can be controlled by a switch. The more the switch is closed, the greater the gain, the larger the pixel value, and the stronger the signal strength.

During a control process of the ADC, generally, the "pixel gain" is fixed, and therefore, the control process of the ADC is mainly used to adjust the "ADC shift" and the "ADC gain", among which the "ADC shift" is for adjusting the location of the whole distribution map, and the "ADC gain" is for adjusting the distribution or dispersion of the distribution map. Each finger is not the same, and the fingerprint recognition sensor can be used to debug captured images via different parameters. Assuming the "ADC shift" and the "ADC gain" each have five levels, the combination of these two can have 25 combinations, so the fingerprint recognition sensor can receive up to 25 fingerprint images each time.

### Feature

Feature or characteristic refers to fingerprint features of a fingerprint image or a fingerprint recognition sensor; the fingerprint feature includes overall features and local features. The overall features in turn include basic pattern patterns such as loop, arch, and whorl. The local features, also known as minutiae, node, or feature point, generally refer to an individual portion of the fingerprint or information representative thereof. Two fingerprints often have the same overall features, however, their local features, that is, the minutiae, cannot be exactly the same. Prints of a fingerprint are not continuous, smooth, or straight, but often break, bifurcated, or curved. These break points, bifurcation points, and turning points are called "minutiae", which can provide confirmation information of the uniqueness of a fingerprint. Minutiae on a fingerprint have the following four different properties. 1) ending, means an end of a print; 2) Bifurcation, means the splitting of a print into two or more than two prints; 3) ridge divergence, means the separating of two parallel prints; 4) dot or island, means a particularly short print that become a little dot; 5) enclosure, means a small ring formed when a print separated into two prints and these two prints immediately merged into one. Fingerprint feature data still includes the follows: 1) short Ridge, means a print which is short but not so short to be a little dot; 2) orientation, means that a minutiae point can toward a certain direction; 3) curvature, describes the speed at which the orientation of a print changes; 4) position, which is described via (x, y) coordinates, can be absolute, or can be inductively recognized relative to triangular points or minutiae.

### ADC

The can be build into a fingerprint recognition sensor, and can be used to convert analog signals of a fingerprint image into digital signals.

### Wet finger

Wet finger, also known as sweaty finer, that is, in the absence of exercise, some people's hands will sweat, commonly known as easy sweat body. In this case, the surface of the finger will have a lot of sweat, such finger will be called wet finger.

### Fingerprint template

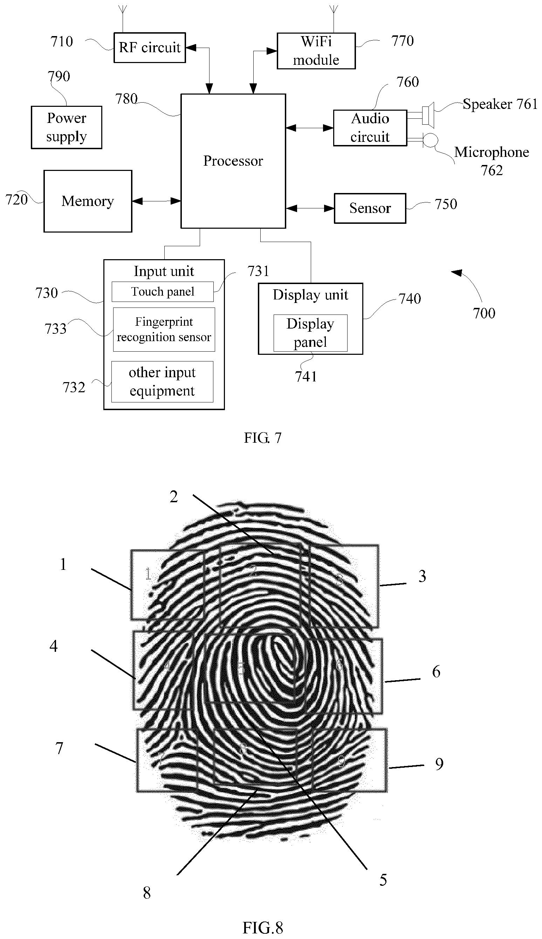

The term "fingerprint template" and variants thereof, generally refers to a substantially complete fingerprint, or information representative thereof, collected from one or more nodes of a finger. For example, when a fingerprint function of a terminal such as a mobile phone is enabled for the first time, the user may be asked to undergo a fingerprint registration process; during the fingerprint registration, the user put his or her finger on a fingerprint sensor for fingerprint image acquisition or receiving by the fingerprint sensor, and the fingerprint image received will be stored as a fingerprint template, usually, one finger corresponds to one fingerprint template; generally, the fingerprint sensor may receive 10-20 times for each finger in order to receive the whole fingerprint face and generate a comprehensive fingerprint template. Feature information can be obtained from the fingerprint image received, and for example, the fingerprint template can be saved in the form of image. FIG.8 illustrates an exemplary fingerprint template, and the numbers marked in the fingerprint of FIG.8 refers to feature points.

### False rejection rate (FRR)

FRR refers to the percentage of recognition instances in which false rejection occurs, namely, refers to the probability of error that the same fingerprint is identified as a different fingerprint and rejected. FRR= (the number of fingerprints false rejected/the total number of fingerprints examined)* 100%.

### Fingerprint image

Fingerprint image generally refers to images collected or received by the fingerprint recognition sensor; fingerprint image data, fingerprint image information, fingerprint data, or fingerprint information generally refers to information or data of the fingerprint image, and can be stored locally in the terminal such as stored in a database or memory built into the terminal. When we refer to receiving or receiving fingerprint image, this can be understood as receiving fingerprint image information or fingerprint image data, or data required to generate or get a fingerprint image.

Besides, the terms "a plurality of" or "multiple" means two or more than two. The term "and/or" is used to describe the association of associated objects and indicates that there can be three relationships. For example, "A and/or *B*" means three situations, that is, A alone, both A and *B*, or *B* alone. The character "/" generally indicates that the associated objects before and after the character are in an "OR" relationship.

According to an embodiment of the present disclosure, there is provided a method for controlling unlocking, in which a first fingerprint image is acquired when a touch operation of a finger of a user is detected, a second fingerprint image and a plurality of third fingerprint images will be acquired when the finger is in a steady state, and a fingerprint comparison will be performed on a specific fingerprint image selected from the second fingerprint image and the third fingerprint images so as to unlock the terminal.

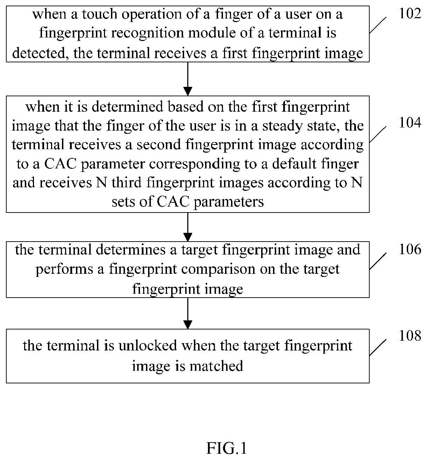

FIG.1 is a flow schematic diagram illustrating a method for controlling unlocking according to an embodiment of the present disclosure. As illustrated in FIG. 1, the method is applicable to a terminal and can begin at block 102.

At block 102, when a touch operation of a finger of a user on a fingerprint recognition sensor of a terminal is detected, the terminal receives a first fingerprint image.

At block 104, when it is determined based on the first fingerprint image that the finger of the user is in the steady state, the terminal receives a second fingerprint image according to a CAC parameter corresponding to a default finger and receives N third fingerprint images according to N sets of CAC parameters, where N is an integer greater than 1. The default finger can be wet finger for example. A "CAC parameter" can be deemed as a set of parameters, and generally, each CAC parameter corresponds to one fingerprint image; in at least one implementation, for one CAC parameter, multiple fingerprint images can be received either, in this case, one image having the best quality will be selected as the second fingerprint image corresponding to the CAC parameter. As an implementation, the CAC parameter corresponding to a wet finger can be deemed a default and fixed parameter.

At block 106, the terminal determines a target fingerprint image and performs a fingerprint comparison on the target fingerprint image; the target fingerprint image is the best fingerprint image among the second fingerprint image and the N third fingerprint images. For example, the best fingerprint image refers to a fingerprint image having the best clarity. Once the finger of the user is put on the fingerprint recognition sensor, operations from block 102 to block 106 can be completed instantly in a way that is not perceived by the user.

At block 108, the terminal is unlocked when the target fingerprint image is matched.

For example, when the user presses the fingerprint recognition sensor, hand shake may occur while the user himself cannot feel. In this case, the fingerprint image obtained by the fingerprint recognition sensor can be vague, and this may affect the follow-up fingerprint comparison. Before the reception of the fingerprint image for unlocking, the terminal can first receive a fingerprint image (that is, the first fingerprint image) and performs a fingerprint stabilization judgment based on the fingerprint image acquired. The fingerprint image for unlocking will be received when the finger of the user tends to be stable. This prevents the fingerprint recognition sensor from receiving a vague fingerprint image due to instability of the hand (that is, hand shake) of the user, thereby avoiding the improvement of FRR of fingerprint recognition. Besides, the process for receiving the first fingerprint image and the process for receiving the second fingerprint image may be performed in parallel so as to shorten the acquisition time of part of the fingerprint images as well as improve fingerprint unlocking speed. Moreover, the fingerprint stabilization judgment can be accomplished with aid of one fingerprint image; therefore, it is possible to reduce the time required for the fingerprint stabilization judgment and reduce the unlocking time of the terminal. The second fingerprint image is received according to the CAC parameter corresponding to the wet finger, which can guarantee that the fingerprint recognition sensor still has one second fingerprint image available in case that none of the N third fingerprint images received is clear because the finger of the user is wet, and the fingerprint recognition FRR can be reduced.

The manner in which the terminal determines whether the finger of the user is in the steady state can include at least the follows.

### Manner 1

The terminal determines whether the clarity of the first fingerprint image is greater than or equal to a preset threshold; when the clarity of the first fingerprint image is greater than or equal to a preset threshold, the terminal determines that the finger of the user is in the steady state; otherwise, when the clarity of the first fingerprint image is less than the preset threshold, the terminal determines that the finger of the user is not in the steady state.

Furthermore, if the finger of the user is not in the steady state, the terminal can determine a target time length according to the clarity of the first fingerprint image; at block 104, the terminal can receive the second fingerprint image according to the CAC parameter corresponding to the wet finger.

For example, generally, when the finger of the user is in the steady state, the fingerprint image received by the fingerprint recognition sensor is clear; therefore, the terminal can determine whether the finger of the user is in the steady state by determining whether the clarity of the first fingerprint image is greater than or equal to a preset threshold (for example, greater than 50%). When the finger of the user is in the steady state, proceed to block 104; otherwise, when the finger of the user is not in the steady state, the terminal can determine the target time length according to the clarity of the first fingerprint image and proceed to block 104 after the target time length. For example, the lower the clarity of the first fingerprint image, the worse the hand of the user shakes, and the target time length will be relatively longer; when the clarity of the first fingerprint image is moderate, the shaking of the hand of the user is moderate either, and the target time length will be relatively shorter. Therefore, when the finger of the user is not in the steady state, by extending the time to receive the fingerprint image for unlocking, it is possible to prevent the fingerprint recognition sensor from obtaining a vague fingerprint image due to the instability of the finger of the user and therefore prevent the fingerprint recognition FRR from increasing.

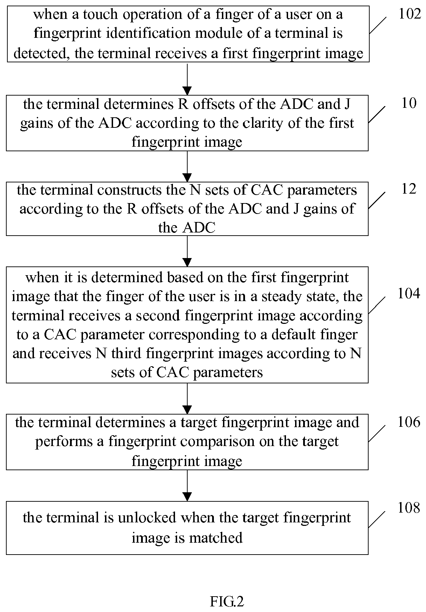

In at least one implementation, the CAC parameter includes an offset of an analog-to-digital converter (ADC) and a gain of the ADC; as illustrated in FIG.2, the method can further include the follows before receiving the N third fingerprint images according to the N sets of CAC parameters at block 104 as illustrated in FIG. 1.

At block 10, the terminal determines R offsets of the ADC and J gains of the ADC according to the clarity of the first fingerprint image, where R and J are integers greater than 1.

At block 12, the terminal generates the N sets of CAC parameters according to the R offsets of the ADC and J gains of the ADC, and each set of the N sets of CAC parameters includes one offset of the ADC and one gain of the ADC.

For example, in order to receive a clearer fingerprint image for unlocking, the terminal can adjust the offset of the ADC and the gain of the ADC according to the clarity of the first fingerprint image and then obtain multiple sets of different CAC parameters. The fingerprint recognition sensor can receive multiple different fingerprint images according to the multiple sets of different CAC parameters, and chose one fingerprint image with the best quality from these fingerprint images, so as to further reduce fingerprint recognition FRR. For example, the clarity of the first fingerprint image corresponds to three offsets of the ADC and four gains of the ADC, then there are twelve sets of CAC parameters generated by the three offsets and the four gains, and twelve different fingerprint images can be obtained. Moreover, the offsets of the ADC and the gains of the ADC that configured to be used to generate the N sets of CAC parameters are determined based on the clarity of the first fingerprint image, in this way, the N sets of CAC parameters determined can be more in line with the current fingerprint reception environment, and thus further improve the clarity of the fingerprint image.

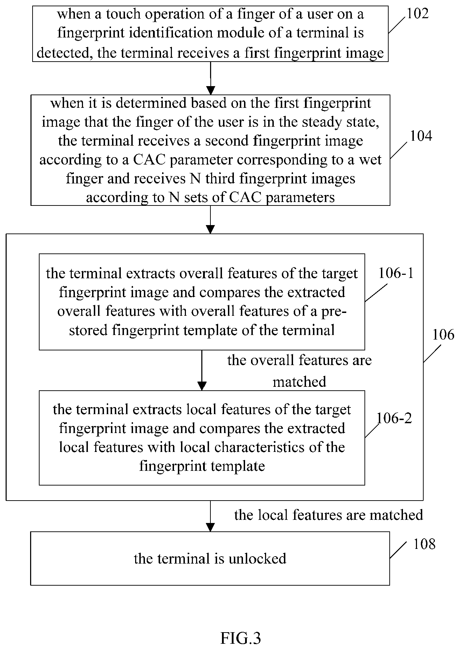

For example, referring to FIG.3, the fingerprint comparison performed on the target fingerprint image at block 106 can be implemented as follows.

At block 106-1, the terminal extracts overall features of the target fingerprint image and compares the extracted overall features with overall features of a pre-stored fingerprint template of the terminal.

When the similarity between the extracted overall features and the overall features of the pre-stored fingerprint template is greater than or equal to a third threshold, proceed to block 106-2.

At bock 106-2, the terminal extracts local features of the target fingerprint image and compares the extracted local features with local features of the fingerprint template.

When the similarity between the extracted local features and the local features of the pre-stored fingerprint template is greater than or equal to a fourth threshold, the terminal determines that the result of the fingerprint comparison is matched and proceeds to block 108.

For example, in order to further reduce the power consumption of the terminal, the terminal may first extract the overall features of the target fingerprint image (without extracting the local features) during the fingerprint comparison; when the overall features match with the overall features of the fingerprint template (that is, the similarity between the two is greater than or equal to the third threshold, for example, the third threshold can be 70%, 80%, 85%, 90% or other values), the terminal extracts the local features of the target fingerprint image and conduct local features comparison; when the overall features does not match with the overall features of the fingerprint template, the terminal can directly determine that the fingerprint comparison does not match. When the local features of the target fingerprint image matches with the local features of the fingerprint template (that is, the similarity between the two is greater than or equal to the fourth threshold, for example, the fourth threshold can be 70%, 80%, 85%, 90% or other values), the terminal determines that the fingerprint comparison is successful. It can be seen that, during the fingerprint comparison, the overall features are extracted first, and the local features are extracted for comparison when the overall features are matched; in this way, it is possible to avoid the problem that the fingerprint comparison is performed when the inputted fingerprint image is not the fingerprint image of the user himself, thereby avoid increasing the power consumption of the terminal.

In at least one implementation, during the fingerprint comparison of the target fingerprint image, the terminal may determine whether there is an application bound to the target fingerprint image. When there is an application bound to the target fingerprint image, at block 108, the terminal can be unlocked by loading and displaying an interface that is running when the application was last closed; when there is no application bound to the target fingerprint image, at block 108, the terminal can be unlocked by loading and displaying the system desktop of the terminal.

For example, in order to enable the user to directly enter the application interface that the he or she wants to open after unlocking the screen of the terminal, the terminal can determine whether there is an application bound with the target fingerprint image. When there is an application bound with the target fingerprint image, the terminal can directly load and display an interface that is running when the application was last closed; when there is no application bound with the target fingerprint image, the terminal will load and display the system desktop of the terminal. The operation of determining whether there is an application bound with the target fingerprint image can be processed in parallel with the fingerprint comparison so as to further save the unlocking time of the terminal and further improve user experience of the terminal.

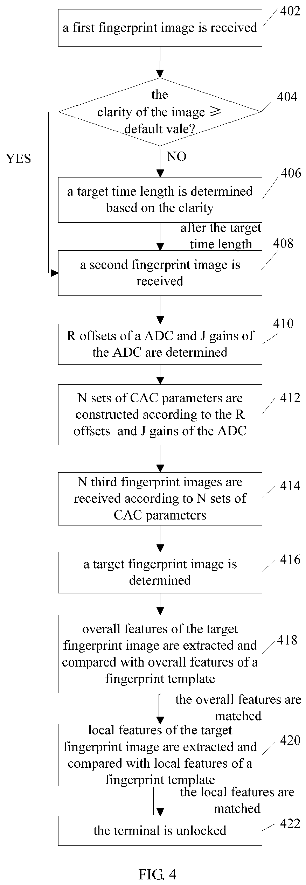

According to an embodiment of the present disclosure, a more detailed method for controlling unlocking is provided. As illustrated in FIG.4, the method can begin at block 402.

At block 402, when a touch operation on a fingerprint recognition sensor of a terminal is detected, the terminal receives or collects a first fingerprint image.

At block 404, the terminal determines whether the clarity of the first fingerprint image is greater than or equal to a preset threshold. When the clarity of the first fingerprint image is greater than or equal to a preset threshold, proceeds to block 408; otherwise, proceed to 406.

At block 406, the terminal determines a target time length according to the clarity of the first fingerprint image, and proceeds to block 408 after the target time length.

At block 408, the terminal receives or collects a second fingerprint image according to a CAC parameter corresponding to a wet finger.

At block 410, the terminal determines R offsets of an ADC and J gains of the ADC according to the clarity of the first fingerprint image.

At block 412, the terminal generates N sets of CAC parameters according to the K offsets of the ADC and H gains of the ADC; where N is an integer greater than 1; each set of the N sets of CAC parameters includes one offset of the ADC and one gain of the ADC.

At block 414, the terminal receives or collects N third fingerprint images according to the N sets of CAC parameters; N is an integer greater than 1.

At block 416, the terminal determines a target fingerprint image; the target fingerprint image is a fingerprint image having the best image quality among the first fingerprint image and the N second fingerprint images.

At block 418, the terminal extracts overall features of the target fingerprint image and compares the extracted overall features with overall features of a pre-stored fingerprint template of the terminal. When the similarity between the extracted overall features and the overall features of the pre-stored fingerprint template is greater than or equal to a third threshold, proceed to block 420.

At block 420, the terminal extracts local features of the target fingerprint image and compares the extracted local features with local features of the fingerprint template.

When the similarity between the extracted local features and the local features of the pre-stored fingerprint template is greater than or equal to a fourth threshold, the terminal determines that the target fingerprint image is matched and proceeds to block 422.

At block 422, the terminal is unlocked.

Parts which are not elaborated in the description of the method of FIG.4 may subject to the description of relevant descriptions of the methods of FIGs.1-3.

In the foregoing description, one method for controlling unlocking according to an embodiment of the present disclosure has been described in detail; in the method described above, the fingerprint comparison is performed on the target fingerprint image selected from the second fingerprint image and the third fingerprint images. The technical solution of the present disclosure is not limited thereto. For example, another method for controlling unlocking is provided as follows.

A touch operation of a finger of a user on a fingerprint recognition sensor of a terminal is detected and a first fingerprint image is received; a second fingerprint image is received according to a CAC parameter corresponding to a default finger when it is determined based on the first fingerprint image that the finger of the user is in the steady state; a fingerprint operation is performed on the second fingerprint image and N third fingerprint images are received according to N sets of CAC parameters, where N is an integer greater than 1; the reception of the N sets of CAC parameters is terminated and the terminal is unlocked when the second fingerprint image is matched.

When the fingerprint comparison of the second fingerprint image is not matched, a target fingerprint image is determined and another fingerprint comparison is performed on the target fingerprint image; the target fingerprint image is the best fingerprint image among the N third fingerprint image. When the target fingerprint image is matched, the terminal will be unlocked. For other details of this method not mentioned herein, please refer to the forgoing description and will not repeated here.

As can be seen, in this method for controlling unlocking, the terminal will be unlocked when one of the second fingerprint image and the target fingerprint image is matched. By means of this method for controlling unlocking, the fingerprint comparison on the second fingerprint image is performed during the reception of the third fingerprint images, therefore, fingerprint reception time is fully utilized and the unlocking time of the terminal can be further shortened.

In the embodiments mentioned above, when it mentions that the terminal or the fingerprint recognition sensor receives a fingerprint images, it means the terminal or the fingerprint sensor may get, acquire, obtain, or collect the fingerprint image. The terms used above can be interchanged without causing ambiguous.

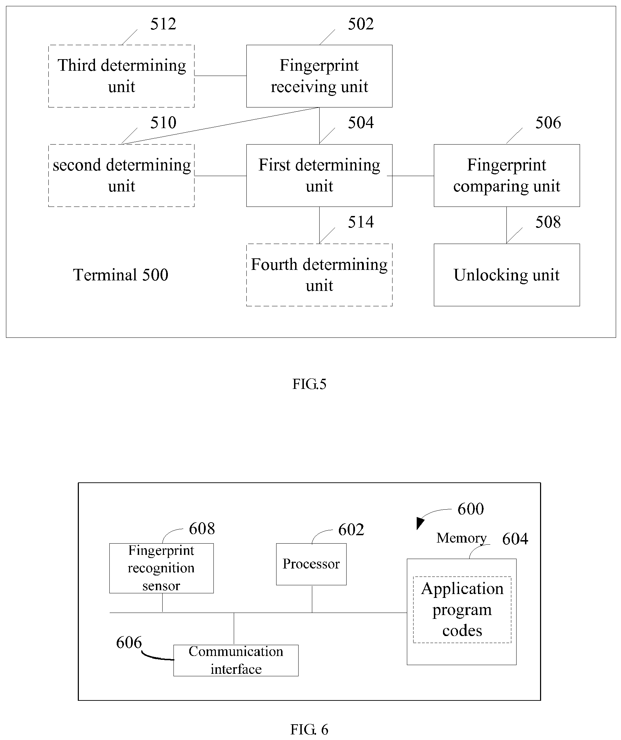

According to an embodiment of the present disclosure, there is provided a terminal 500. As illustrated in FIG.5, the terminal 500 can includes a fingerprint receiving unit 502, a first determining unit 504, a fingerprint comparing unit 506, and an unlocking unit 508.

The fingerprint receiving unit 502 is configured to receive a first fingerprint image when a touch operation of a finger of a user on a fingerprint recognition sensor of a terminal is detected.

The fingerprint receiving unit 502 is further configured to receive a second fingerprint image according to a CAC parameter corresponding to a default finger when it is determined based on the first fingerprint image that the finger of the user is in a steady state, and receive N third fingerprint images according to N sets of CAC parameters, wherein N is an integer greater than 1. As one implementation, the default finger can be a wet finger.

The first determining unit 504 is configured to determine a target fingerprint image; the target fingerprint image is the best fingerprint image among the second fingerprint image and the N third fingerprint images. For instance, the best fingerprint image refers to a fingerprint image having the best clarity among the fingerprint images.

The fingerprint comparing unit 506 is configured to perform a fingerprint comparison on the target fingerprint image.

The unlocking unit 508 is configured to unlock the terminal when the target fingerprint image is matched.

In at least one implementation, it is determined that the finger of the user is in the steady state when the clarity of the first fingerprint image is greater than or equal to a preset value; and it is determined that the finger of the user is not in the steady state when the clarity of the first fingerprint image is less than the preset value.

In at least one implementation, as illustrated in FIG.5, the terminal further includes a second determining unit 510, which is configured to determine a target time length according to the clarity of the first fingerprint image when the finger of the user is not in the steady state. The fingerprint receiving unit 502 is configured to receive the second fingerprint image according to the CAC parameter corresponding to the wet finger after the target time length.

In at least one implementation, the CAC parameter includes an offset of an ADC and a gain of the ADC. The terminal further includes an third determining unit 512, which is configured to determine R offsets of the ADC and J gains of the ADC according to the clarity of the first fingerprint image, and generate the N sets of CAC parameters according to the R offsets of the ADC and J gains of the ADC, where R and J are integers greater than 1, each set of the N sets of CAC parameters comprises one offset of the ADC and one gain of the ADC.

In at least one implementation, the fingerprint comparing unit 506 is configured to: extract overall features of the target fingerprint image, and compare the extracted overall features with overall features of a pre-stored fingerprint template of the terminal; when the similarity between the extracted overall features and the overall features of the pre-stored fingerprint template is greater than or equal to a third threshold, extract local features of the target fingerprint image, and compare the extracted local features with local features of the fingerprint template; and when the similarity between the extracted local features and the local features of the pre-stored fingerprint template is greater than or equal to a fourth threshold, determine that the result of the fingerprint comparison is matched.

In at least one implementation, the terminal further includes a fourth determining unit 514, which is configured to determine whether there is an application bound to the target fingerprint image during the fingerprint comparison of the target fingerprint image. The unlocking unit 508 is configured to load and display an interface that is running when the application was last closed when there is an application bound to the target fingerprint image, or the unlocking unit 508 is configured to load and display the system desktop of the terminal when there is no application bound to the target fingerprint image.

What need to be explained is, the units described above, that is, the fingerprint receiving unit 502, the first determining unit 504, the fingerprint comparing unit 506, the unlocking unit 508, the second determining unit 510, the third determining unit 512, and the fourth determining unit 514, are configured to perform the relevant operations illustrated in FIG.1-FIG.4.

In this embodiment, the terminal 500 is presented in the form of units or modules. "Units/Modules" used herein may refer to any one of an application-specific integrated circuit (ASIC), processors for performing one or more software or hardware programs, a memory, a integrated logic circuit, or other components with the above functions.

As illustrated in FIG.6, a terminal 600 may be implemented in the structure of FIG.6, and the terminal 600 may include at least one processor 602, at least one memory 604, at least one communication interface 606, and a fingerprint recognition sensor 608. The processor 602, the memory 604, the fingerprint recognition sensor 608, and the communication interface 606 can connect and communicate with each other via a communication bus. Furthermore, the receiving unit 502 can be implemented via the fingerprint recognition sensor 608 of the terminal illustrated in FIG.6; the first determining unit 504, the fingerprint comparing unit 506, the unlocking unit 508, and the second determining unit 510, the third determining unit 512, and the fourth determining unit 514 can be implemented via the processor 602 of the terminal illustrated in FIG.6.

The processor 602 may be one of a central processing unit (CPU), a microprocessor, an application-specific integrated circuit (ASIC), or one or more integrated circuits for controlling the programs for the implementation of above-mentioned technical solutions.

The communication interface 606 is configured to communicate with other devices or communication networks such as Ethernet, radio access network (RAN), wireless local area network (WLAN) and the like.

The memory 604 may be a read-only memory (ROM) or other types of static storage devices that can store static information and instructions, random access memory (RAM) or other types of dynamic storage devices that can store information and instructions, or may be electrically erasable programmable read-only memory (EEPROM), compact disc read-only memory(CD-ROM) or other disc storage media, disc storage media (including compact discs, laser discs, compact discs, digital versatile discs, Blu-ray discs and the like), disk storage media or other magnetic storage devices, or may be any other media that can be used to carry or store desired program code in the form of instructions or data structures and that can be accessed by a computer. The present disclosure is not limited thereto. The memory can exist independently and connect to the processor 602 via the communication bus 606. The memory can also be integrated with the processor 602.

The memory 604 is configured to store application codes that executes the above-mentioned technical schemes and is controlled by the processor 602. The processor 602 is configured to execute the application codes stored in the memory 604.

The programs codes stored in the memory 604 can be used to perform the method for controlling unlocking of a terminal as illustrated in FIG.1 to FIG.4. For example, when a touch operation of a user on a fingerprint recognition sensor of a terminal is detected, a first fingerprint image is received; it is determined whether or not a finger of the user is in a steady state based on the first fingerprint image; a second fingerprint image is received according to a CAC parameter corresponding to a wet finger when the finger of the user is in the steady state, and N third fingerprint images are received according to N sets of CAC parameters, where N is an integer greater than 1; a target fingerprint image is determined and a fingerprint comparison is performed on the target fingerprint image, the target fingerprint image is a fingerprint image having the best image quality among the second fingerprint image and the N third fingerprint images; the terminal is unlocked when the result of the fingerprint comparison is matched.

The embodiment of the present disclosure further provides a more specific application scenario in which the terminal is a mobile phone and the following describes components of the mobile phone in detail with refer to FIG.7. As illustrated in FIG.7, a mobile phone 700 can includes a RF (radio frequency) circuit 710, a memory 720, an input unit 730, a display unit 740, a sensor 750, an audio circuit 760, a WiFi module 770, a processor 780, and a power supply 790. The input unit 630 further includes a touch panel 731, other input equipment 732, and a fingerprint recognition sensor 733. The display unit 740 includes a display panel 740. The audio circuit 760 is connected with a speaker 761 and a microphone 762.

The RF circuit 710 is configured for receiving and transmitting signals or transmitting or receiving information during a call, and in particular, receiving downlink information of a base station and transferring the downlink information to the processor 780 for processing, and transmitting uplink data to the base station. Generally, the RF circuit 710 includes but not limited to an antenna, at least one amplifier, a transceiver, coupler, low noise amplifier (LNA), duplexer and the like. In addition, the RF circuit 710 may also communicate with the network and other devices by wireless communication. The above wireless communication may use any communication standard or protocol, which includes but not limited to Global System of mobile communication (GSM), general packet radio service (GPRS), code division multiple access (CDMA), wideband code division multiple access (WCDMA), long term evolution (LTE), E-mail, short messaging service (SMS) and so on.

The memory 720 may be configured to store software programs and modules, and the processor 780 executes various function applications and data processing of the mobile phone by running the software programs and the modules stored in the memory 720. The memory 720 may mainly include a program storage region and a data storage region, the storage program region may store an operation system, application programs needed for at least one function (a fingerprint image acquisition function, a fingerprint matching function, an unlocking function, a finger stability judgment function) and so on; and the data storage region may store data (such as fingerprint image received by a fingerprint recognition sensor, CAC parameter corresponding to a wet finger, and dynamic CAC parameters) created according to use of the mobile phone, and so on. In addition, the memory 720 may include a high-speed RAM, and may further include a non-volatile memory such as one of at least a disk storage device, a flash device, or other non-volatile solid storage devices.

The input unit 730 may be configured to receive input digital or character information and generate key signal input associated with user setting and functional control of the mobile phone. Specifically, the input unit 730 may includes a touch panel 731, other input devices 732 and a fingerprint recognition sensor 733. The touch panel 731, also referred to as a touch screen, may receive a touch operation of the user thereon or nearby (e.g., operation on or near the touch panel 731 by a user using a finger or stylus, or any suitable object or attachment), and drive a corresponding connection device according to a pre-set program. The touch panel 731 may include a touch detection device and a touch controller. The touch detection device detects the touching position of the user and detects a signal resulted from the touch operation, and transmits the signal to the touch controller. The touch controller receives the touch information from the touch detection device and converts the information into contact coordinates and sends it to the processor 780, the touch controller can receive and execute the command sent by the processor 780. In addition, the touch panel 731 can be realized using various types such as resistive, capacitive, infrared, and surface acoustic waves. In addition to the touch panel 731, the input unit 730 may still include other input devices 732. The other input devices 732 may include, but is not limited to, at least one of a physical keyboard, a function key (such as volume control buttons, switch buttons and so on), a trackball, a mouse, and a joystick. The fingerprint recognition sensor 733 may be provided in conjunction with the dome key of the terminal or can be provided in combination with the touch panel 731. For example, the fingerprint recognition sensor 733 is provided below the touch panel 731, when a finger of the user touches the touch panel of the terminal, the fingerprint recognition sensor 733 below the touch panel 731 can receive a fingerprint image of the finger of the user.

The display unit 740 may be configured to display information input by the user or information provided for the user or various menus of the mobile phone. The display unit 740 may include a display panel 741, and alternatively, the display panel 741 may be configured in the form of a liquid crystal display (LCD), an organic light-emitting diode (OLED) and so on. Further, the touch panel 731 may covers the display panel 741. When the touch panel 731 detects a touch operation (touch event) thereon or nearby, information of the touch operation can be transmitted to the processor 780 so as to determine the type of the touch event. The processor 780 provides corresponding visual output on the display panel 741 according to the type of the touch event. Although in FIG. 7, the touch panel 731 and the display panel 741 are used as two separate components to realize the input and output functions of the mobile phone, in some embodiments, the touch panel 731 may be integrated with the display panel 741 to implement the input and output functions of the mobile phone.

The mobile phone may also include at least one sensor 750, such as a light sensor, a motion sensor, and other sensors. Specifically, the light sensor may include an ambient light sensor and a proximity sensor, among which the ambient light sensor may adjust the brightness of the display panel 741 according to ambient lights, and the proximity sensor may turn off the display panel 741 and/or backlight when the mobile phone reaches nearby the ear. As a kind of motion sensor, the accelerometer sensor can detect the magnitude of acceleration in all directions (typically three axes, that is, *x, y,* and z); when stationary, the accelerometer sensor can detect the magnitude and direction of gravity when stationary; the accelerometer sensor can also identify the application of mobile gestures (such as vertical and horizontal screen switch, related games, magnetometer attitude calibration), or the accelerometer sensor can be used for vibration recognition of related functions (such as a pedometer, percussion) and so on. The mobile phone can also be equipped with a gyroscope, barometer, hygrometer, thermometer, infrared sensor and other sensors, and will not repeat here.

The audio circuit 780, the speaker 761, the microphone 762 may provide an audio interface between the user and the mobile terminal. The audio circuit 780 may convert the received audio data into electrical data and transfer the electrical data to the speaker 761, thereafter, the speaker 761 converts the electrical data into a sound signal for output. On the other hand, the microphone 762 converts the collected sound signal into an electrical signal which will be received by the audio circuit 780 and converted into audio data to output to the processor 780, the audio data is processed by the output processor 780 and transmitted via an RF circuit 710 to, for example, another mobile phone, or, the audio data is output to the memory 720 for further processing.

WiFi belongs to a short-range wireless transmission technology, the mobile phone may assist the user in E-mail receiving and sending, webpage browsing, access to streaming media and the like by means of the WiFi module 770; WiFi provides users with wireless broadband Internet access. Although illustrated in FIG. 7, it should be understood that the WiFi module 770 is not a necessary part of the mobile phone and can be omitted according to actual needs without departing from the essential nature of the present disclosure.

The processor 780 is the control center of the mobile phone, it uses various interfaces and lines to connect various parts of the whole mobile phone, runs or executes software programs and/or modules stored in the memory 720, and calls data stored in the memory 720 to perform various functions of the mobile phone and process data, thereby monitoring the mobile phone. In at least one implementation, the processor 780 may include one or more processing units; for example, the processor 780 may integrate an application processor and a modem processor, wherein the application processor handles the operating system, the user interface, the application, and so on, and the modem processor mainly processes wireless communication. It will be appreciated that the above-mentioned modem processor may not be integrated into the processor 780.

The mobile phone also includes a power supply 790 (e.g., a battery) that supplies power to various components. For instance, the power supply 790 may be logically connected to the processor 780 via a power management system to enable management of charging, discharging, and power consumption through the power management system. Although not illustrated, the mobile phone may include a camera, a Bluetooth module, etc., and will not be elaborated here. The method of each step in the foregoing embodiments can be realized based on the configuration of the terminal illustrated in FIG.7.

The embodiment of the present disclosure also provides a computer readable storage medium. The computer readable storage medium may store a program which, when executed, can accomplish all or part of the steps of the unlocking method described in the above-described method embodiment.

It is to be noted that, for the sake of simplicity, the foregoing method embodiments are described as a series of action combinations, however, it will be appreciated by those skilled in the art that the present disclosure is not limited by the sequence of actions described. That is because that, according to the present disclosure, certain steps may be performed in other order or simultaneously. Also, it will be appreciated by those skilled in the art that the embodiments described in the specification are exemplary embodiments and the actions and modules involved are not necessarily necessary for the present disclosure.

In the foregoing embodiments, descriptions of each embodiment are emphasized respectively, and parts which are not elaborated in a certain embodiment may subject to relevant descriptions of other embodiments.

The apparatus disclosed in embodiments provided herein may be implemented in other ways. For example, the device/apparatus embodiments described above are merely illustrative; for instance, the division of the unit is only a logical function division and there can be another way of division during actual implementations, for example, multiple units or components may be combined or may be integrated into another system, or some features may be ignored or not performed. In addition, coupling or communication connection between each displayed or discussed component may be direct coupling or communication connection, or may be indirect coupling or communication among devices or units via some interfaces, and may be electrical and mechanical or adopt other forms.

The units described as separate components may or may not be physically separate, the components shown as units may or may not be physical units, and namely they may be in the same place or may be distributed to multiple network elements. Part or all of the units may be selected per actual needs to achieve the purpose of the technical solutions of the embodiments.

In addition, the functional units in various embodiments of the present disclosure may be integrated in one processing unit, or each unit may be physically present, or two or more units may be integrated in one unit. The above-mentioned integrated unit can be implemented in the form of hardware or a software function unit.

The integrated unit may be stored in a computer-readable memory when it is implemented in the form of a software functional unit and is sold or used as a separate product. Based on such understanding, the technical solutions of the present disclosure essentially, or the part of the technical solutions that contributes to the related art, or all or part of the technical solutions, may be embodied in the form of a software product which is stored in a memory and includes instructions for causing a computer device (which may be a personal computer, a server, or a network device and so on) to perform all or part of the steps described in the various embodiments of the present disclosure. The memory described above includes a variety of media that can store programs codes, such as a USB disk, a read-only memory (ROM), a random-access memory (RAM), a mobile hard disk, a magnetic disk, or an optical disk and so on.

It will be understood by those of ordinary skill in the art that all or a part of the various methods of the embodiments described above may be accomplished by means of a program to instruct associated hardware, the program may be stored in a computer-readable memory, which may include a flash memory, a read-only memory (ROM), a random-access memory (RAM), Disk or CD, and so on.

While the present disclosure has been described in detail above with reference to the exemplary embodiments, the scope of the present disclosure is not limited thereto. As will occur to those skilled in the art, the present disclosure is susceptible to various modifications and changes without departing from the spirit and principle of the present disclosure. Therefore, the scope of the present disclosure should be determined by the scope of the claims.

## Claims

1. A method for controlling unlocking, comprising:
when a touch operation of a finger of a user on a fingerprint recognition sensor of a terminal is detected, receiving a first fingerprint image;
receiving a second fingerprint image according to a CAC parameter corresponding to a default finger when it is determined based on the first fingerprint image that the finger of the user is in a steady state;
receiving N third fingerprint images according to N sets of CAC parameters, wherein N is an integer greater than 1;
determining a target fingerprint image, wherein the target fingerprint image is the best fingerprint image among the second fingerprint image and the N third fingerprint images; and
matching the target fingerprint image and unlocking the terminal when target fingerprint image is matched.

2. The method of claim 1, wherein it is determined that the finger of the user is in the steady state when the clarity of the first fingerprint image is greater than or equal to a preset value.

3. The method of claim 1 or 2, further comprising:
determining a target time length according to the clarity of the first fingerprint image when the finger of the user is not in the steady state; and
wherein receiving the second fingerprint image according to the CAC parameter corresponding to the default finger comprises: receiving the second fingerprint image according to the CAC parameter corresponding to the default finger after the target time length.

4. The method of any of claims 1 to 3, wherein the CAC parameter comprises an offset of an analog-to-digital converter (ADC) and a gain of the ADC, before receiving the N third fingerprint images according to the N sets of CAC parameters, the method further comprises;
determining R offsets of the ADC and J gains of the ADC according to the clarity of the first fingerprint image, wherein R and J are integers greater than 1; and
generating the N sets of CAC parameters according to the R offsets of the ADC and J gains of the ADC, wherein each set of the N sets of CAC parameters comprises one offset of the ADC and one gain of the ADC.

5. The method of any of claims 1 to 4, wherein matching the target fingerprint image comprises:
extracting overall features of the target fingerprint image, and comparing the extracted overall features with overall features of a pre-stored fingerprint template of the terminal;
when the similarity between the extracted overall features and the overall features of the pre-stored fingerprint template is greater than or equal to a third threshold, extracting local features of the target fingerprint image, and comparing the extracted local features with local features of the fingerprint template; and
when the similarity between the extracted local features and the local features of the pre-stored fingerprint template is greater than or equal to a fourth threshold, determining that the target fingerprint image is matched.

6. The method of any of claims 1 to 5, wherein
when there is an application bound to the target fingerprint image, unlocking the terminal comprises: loading and displaying an interface that is running when the application was last closed; and
when there is no application bound to the target fingerprint image, unlocking the terminal comprises: loading and displaying the system desktop of the terminal.

7. A terminal, comprising:
a fingerprint receiving unit, configured to receive a first fingerprint image when a touch operation of a finger of a user on a fingerprint recognition sensor of a terminal is detected, receive a second fingerprint image according to a CAC parameter corresponding to a default finger when it is determined based on the first fingerprint image that the finger of the user is in a steady state, and receive N third fingerprint images according to N sets of CAC parameters, wherein N is an integer greater than 1;
a first determining unit, configured to determine a target fingerprint image, wherein the target fingerprint image is the best fingerprint image among the second fingerprint image and the N third fingerprint images;
a fingerprint comparing unit, configured to match the target fingerprint image; and
an unlocking unit, configured to unlock the terminal when the target fingerprint image is matched.

8. The terminal of claim 7, wherein the finger of the user is in the steady state when the clarity of the first fingerprint image is greater than or equal to a preset value.

9. The terminal of claim 7 or 8, further comprising a second determining unit configured to determine a target time length according to the clarity of the first fingerprint image when the finger of the user is not in the steady state; and
wherein the fingerprint receiving unit is configured to receive the second fingerprint image according to the CAC parameter corresponding to the default finger after the target time length.

10. The terminal of any of claims 7 to 9, wherein the CAC parameter comprises an offset of an analog-to-digital converter (ADC) and a gain of the ADC, the terminal further comprises:
a third determining unit, configured to determine R offsets of the ADC and J gains of the ADC according to the clarity of the first fingerprint image, wherein R and J are integers greater than 1, and generate the N sets of CAC parameters according to the R offsets of the ADC and J gains of the ADC, wherein each set of the N sets of CAC parameters comprises one offset of the ADC and one gain of the ADC.

11. The terminal of any of claims 7 to 10, wherein the fingerprint comparing unit is configured to:
extract overall features of the target fingerprint image, and compare the extracted overall features with overall features of a pre-stored fingerprint template of the terminal;
when the similarity between the extracted overall features and the overall features of the pre-stored fingerprint template is greater than or equal to a third threshold, extract local features of the target fingerprint image and compare the extracted local features with local features of the fingerprint template; and
when the similarity between the extracted local features and the local features of the pre-stored fingerprint template is greater than or equal to a fourth threshold, determine that the result of the fingerprint comparison is matched.

12. The terminal of any of claims 7 to 11, further comprising:
a fourth determining unit, configured to determine whether there is an application bound to the target fingerprint image; and
the unlocking unit is configured to load and display an interface that is running when the application was last closed when there is an application bound to the target fingerprint image, or load and display the system desktop of the terminal when there is no application bound to the target fingerprint image.

13. A terminal, comprising:
a memory configured to store executable program codes;
a processor coupled with the memory;
a fingerprint recognition sensor configured to receive fingerprint images;
the processor is configured to call the executable program codes stored in the memory to perform the method for controlling unlocking of any of claims 1-6.

14. A method for controlling unlocking, comprising:
when a touch operation of a finger of a user on a fingerprint recognition sensor of a terminal is detected, receiving a first fingerprint image;
receiving a second fingerprint image according to a CAC parameter corresponding to a default finger when it is determined based on the first fingerprint image that the finger of the user is in a steady state,
matching the second fingerprint image and receiving N third fingerprint images according to N sets of CAC parameters, wherein N is an integer greater than 1; and
terminating the reception of the N sets of CAC parameters and unlocking the terminal when the second fingerprint image is matched.

15. The method of claim 14, wherein the method further comprises:
when the second fingerprint image is not matched, determining a target fingerprint image and matching the target fingerprint image, wherein the target fingerprint image is the best fingerprint image among the N third fingerprint image; and
unlocking the terminal when the target fingerprint image is matched.
